# EUROPEAN PATENT APPLICATION

(11) **EP 4 613 686 A1**
(43) Date of publication of application: **10.09.2025**
(21) Application number: 25162317.9
(22) Date of filing: 07.03.2025
(51) Int. Cl.: B65H 23/025, B65H 23/34, B65H 27/00, H01M 10/04, H01M 10/0587

(54) **APPARATUS AND METHOD FOR MANUFACTURING SECONDARY BATTERY AND SECONDARY BATTERY MANUFACTURED THEREBY**

(30) Priority: 08.03.2024 KR 20240032977
(71) Applicant: SAMSUNG SDI CO., LTD., Yongin-si, Gyeonggi-do 17084 (KR)
(72) Inventor: JANG, Han Byeol, 17084 Yongin-si, Gyeonggi-do (KR); CHOI, Jong Woo, 17084 Yongin-si, Gyeonggi-do (KR); JEOUNG, Seo Kyo, 17084 Yongin-si, Gyeonggi-do (KR); JEONG, Tae Su, 17084 Yongin-si, Gyeonggi-do (KR); OH, Eun Seok, 17084 Yongin-si, Gyeonggi-do (KR)
(74) Representative: Michalski Hüttermann & Partner Patentanwälte mbB

(57) **Abstract**

Disclosed are a secondary battery manufacturing apparatus and method capable of preventing wrinkles and folding of a substrate tab during manufacture of an electrode plate and preventing rupture of the electrode plate during travel or winding of the electrode plate and a secondary battery manufactured thereby. The manufacturing apparatus includes an unwinding unit unwinding an electrode plate wound on a first roller, the electrode plate including a coated portion in which an active material is coated on a substrate portion and an uncoated portion in which an active material is not coated on the substrate portion, a fold prevention portion forming unit forming a fold prevention portion on the uncoated portion of the electrode plate, a notching unit notching the uncoated portion including the fold prevention portion to form a substrate tab, and a winding unit winding the electrode plate including the substrate tab on a second roller.

## Description

### FIELD

Aspects of embodiments of the present disclosure relate to an apparatus and method for manufacturing a secondary battery and a secondary battery manufactured thereby.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to an aspect of one or more embodiments of the present disclosure, a secondary battery manufacturing apparatus and method capable of preventing wrinkles and folding of a substrate tab during a process of manufacturing an electrode plate of a secondary battery and preventing rupture of the electrode plate during travel or winding of the electrode plate and a secondary battery manufactured thereby is provided.

These and other aspects and features of the present disclosure will be described in or will be apparent from the following description of embodiments of the present disclosure.

An apparatus for manufacturing a secondary battery according to an embodiment of the present disclosure includes an unwinding unit configured to unwind an electrode plate wound on a first roller, the electrode plate including an active material coated portion in which an active material is coated on a substrate portion and an uncoated portion in which the active material is not coated on the substrate portion, a fold prevention portion forming unit configured to form a fold prevention portion on the uncoated portion of the electrode plate, a notching unit configured to notch the uncoated portion including the fold prevention portion formed thereon to form a substrate tab, and a winding unit configured to wind the electrode plate including the substrate tab formed thereon on a second roller.

In one or more embodiments, the fold prevention portion forming unit may include a driving roller including a circular area and an uneven area, the circular area and the uneven area disposed on the same axis while being spaced apart from each other, and a driven roller configured to rotate in close proximity to the uneven area of the driving roller. The electrode plate may travel between the driving roller and the driven roller such that the active material coated portion of the electrode plate travels in contact with the circular area of the driving roller and the uncoated portion of the electrode plate travels in contact with the uneven area of the driving roller and the driven roller, such that the fold prevention portion may be imprinted on the uncoated portion.

In one or more embodiments, the elastic modulus of the uneven area may be greater than the elastic modulus of the driven roller.

In one or more embodiments, the uncoated portion may include a first surface and a second surface opposite the first surface, the uneven area may contact the first surface of the uncoated portion, the driven roller may contact the second surface of the uncoated portion, and the rotational axis of the uneven area and the rotational axis of the driven roller may overlap each other in a vertical direction.

In one or more embodiments, the fold prevention portion may comprise a pattern including a plurality of straight lines extending in a direction perpendicular to the longitudinal direction of the uncoated portion by the fold prevention portion forming unit.

In one or more embodiments, the fold prevention portion may comprise a pattern including a plurality of straight lines extending in a direction parallel to the longitudinal direction of the uncoated portion by the fold prevention portion forming unit.

In one or more embodiments, the fold prevention portion may comprise a pattern including a plurality of oblique lines extending at an angle with respect to the longitudinal direction of the uncoated portion by the fold prevention portion forming unit.

In one or more embodiments, the fold prevention portion may comprise a pattern including a plurality of straight lines extending in a direction perpendicular to the longitudinal direction of the uncoated portion and at least one straight line extending in a direction parallel to the longitudinal direction of the uncoated portion by the fold prevention portion forming unit.

In one or more embodiments, the uneven area of the driving roller may have a depth of 0.1 mm to 2 mm.

In order to accomplish the above objective, a method of manufacturing a secondary battery according to an embodiment of the present disclosure includes unwinding an electrode plate wound on a first roller, the electrode plate including an active material coated portion in which an active material is coated on a substrate portion and an uncoated portion in which an active material is not coated on the substrate portion, forming a fold prevention portion on the uncoated portion of the electrode plate, notching the uncoated portion including the fold prevention portion formed thereon to form a substrate tab, and winding the electrode plate including the substrate tab formed thereon on a second roller.

In one or more embodiments, in the forming a fold prevention portion, a driving roller including a circular area and an uneven area, the circular area and the uneven area disposed on the same axis while being spaced apart from each other, and a driven roller configured to rotate in close proximity to the uneven area of the driving roller may be provided. The electrode plate may travel between the driving roller and the driven roller such that the active material coated portion of the electrode plate travels in contact with the circular area of the driving roller and the uncoated portion of the electrode plate travels in contact with the uneven area of the driving roller and the driven roller, such that the fold prevention portion may be imprinted on the uncoated portion.

In one or more embodiments, the elastic modulus of the uneven area may be greater than the elastic modulus of the driven roller.

In one or more embodiments, the uncoated portion may include a first surface and a second surface opposite the first surface, the uneven area may contact the first surface of the uncoated portion, the driven roller may contact the second surface of the uncoated portion, and the rotational axis of the uneven area and the rotational axis of the driven roller may overlap each other in a vertical direction.

In one or more embodiments, in the forming a fold prevention portion, the fold prevention portion may be formed in a pattern including a plurality of straight lines extending in a direction perpendicular to the longitudinal direction of the uncoated portion.

In one or more embodiments, in the forming a fold prevention portion, the fold prevention portion may be formed in a pattern including a plurality of straight lines extending in a direction parallel to the longitudinal direction of the uncoated portion.

In one or more embodiments, in the forming a fold prevention portion, the fold prevention portion may be formed in a pattern including a plurality of oblique lines extending at an angle with respect to the longitudinal direction of the uncoated portion.

In one or more embodiments, in the forming a fold prevention portion, the fold prevention portion may be formed in a pattern including a plurality of straight lines extending in a direction perpendicular to the longitudinal direction of the uncoated portion and at least one straight line extending in a direction parallel to the longitudinal direction of the uncoated portion.

In one or more embodiments, the uneven area of the driving roller may be formed to have a depth of 0.1 mm to 2 mm.

In order to accomplish the above objective, a secondary battery according to an embodiment of the present disclosure is manufactured by the method described above.

According to some embodiments, an apparatus for manufacturing a secondary battery comprises a fold prevention portion forming unit configured to form a fold prevention portion on an uncoated portion of an electrode plate; and a notching unit configured to notch the uncoated portion comprising the fold prevention portion formed thereon to form a substrate tab.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1A is an exploded perspective view showing an exemplary secondary battery according to the present disclosure according to some embodiments;
FIG. 1B is a partial exploded perspective view showing an exemplary electrode assembly accommodated in the exemplary secondary battery according tosome embodiments;
FIG. 2A is a schematic diagram showing an exemplary apparatus for manufacturing a secondary battery according to some embodiments;
FIG. 2B is a flowchart showing an exemplary method of manufacturing a secondary battery according to some embodiments;
FIG. 3A is a perspective view showing an exemplary fold prevention portion forming unit of the exemplary apparatus for manufacturing a secondary battery according to some embodiments;
FIG. 3B is a front view showing a driving roller of the exemplary fold prevention portion forming unit according to some embodiments;
FIG. 3C illustrates a side view and a partial enlarged view showing the driving roller of the exemplary fold prevention portion forming unit according to some embodiments;
FIG. 4 is a schematic diagram showing the operation of the exemplary apparatus for manufacturing a secondary battery according to some embodiments;
FIGs. 5A to 5D are schematic diagrams showing various forms of a fold prevention portion of an electrode plate and the driving roller of the exemplary apparatus for manufacturing a secondary battery according to some embodiments;
FIGs. 6A and 6B are perspective views showing a battery pack including the exemplary secondary battery according to some embodiments; and
FIGs. 7A and 7B are, respectively, a perspective view and a side view showing a vehicle body and a vehicle including the exemplary battery pack according to some embodiments.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

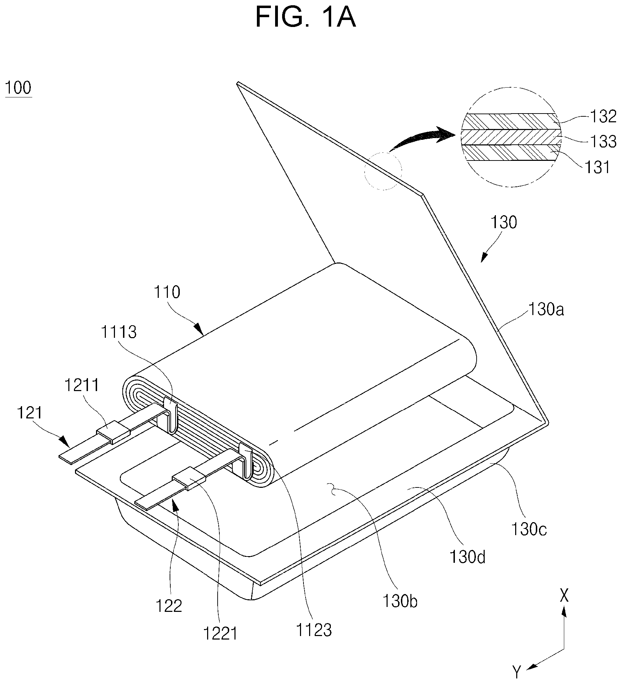

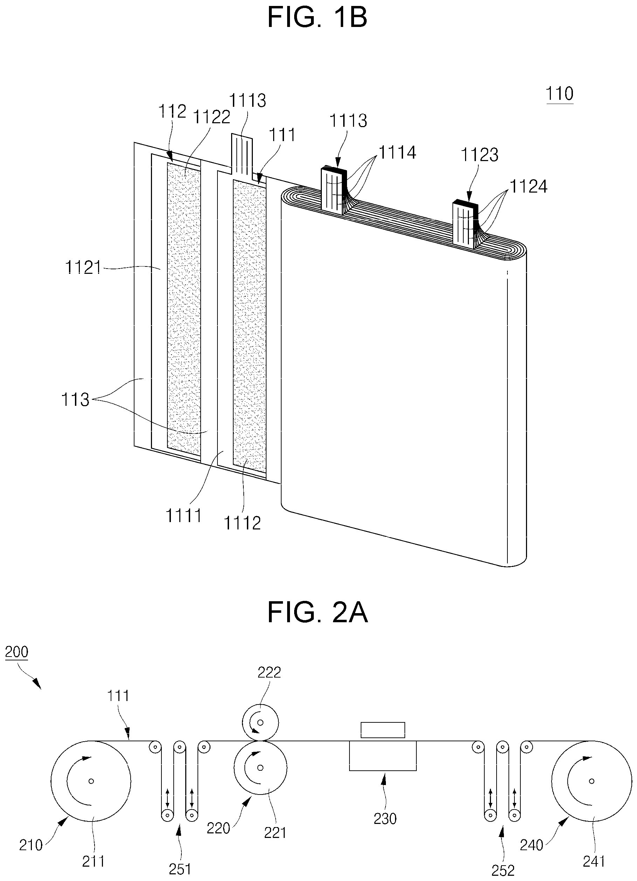

FIG. 1A is an exploded perspective view showing an exemplary secondary battery 100 according to some embodiments of the present disclosure, and FIG. 1B is a partial exploded perspective view showing an exemplary electrode assembly 110 accommodated in the exemplary secondary battery 100 according to some embodiments of the present disclosure. As shown in FIGs. 1A and 1B, the secondary battery 100 may include an electrode assembly 110, a first lead tab 121, a second lead tab 122, and a case 130.

The electrode assembly 110 may be formed by winding or stacking a stack of a first electrode plate 111, a second electrode plate 112, and a separator 113 interposed between the first and second electrode plates 111 and 112. The first and second electrode plates 111 and 112 and the separator 113 may be formed in the shape of a thin plate or a thin film. In some embodiments, the electrode assembly 110 is formed by winding the stack, and the winding axis thereof may be parallel to the longitudinal direction (Y direction) of the case 130. In some embodiments, the electrode assembly 110 may be of a stacked type rather than a wound type. In some embodiments, the electrode assembly 110 may be a Z stack electrode assembly in which the separator 113 is bent in a Z-shape, and a positive electrode plate and a negative electrode plate are respectively inserted into both sides of the separator 113. In some embodiments, one or more electrode assemblies 110 may be accommodated in the case 130 in a state of being stacked such that the long side surfaces thereof are adjacent to each other. In one or more embodiments, the first electrode plate 111 of the electrode assembly 110 may serve as a negative electrode, and the second electrode plate 112 of the electrode assembly 110 may serve as a positive electrode. In other embodiments, the reverse may also be possible.

The first electrode plate 111 may be formed by coating a first electrode active material (e.g., a negative electrode active material) 1112, such as graphite or carbon, on a first electrode current collector 1111, which is formed as a metal foil made of copper, a copper alloy, nickel, and/or a nickel alloy, and may include a plurality of first electrode tabs 1113, which are areas not coated with the first electrode active material 1112. In one or more embodiments, the first electrode current collector 1111 may be referred to as a first electrode substrate, and the first electrode tab 1113 may be referred to as a first substrate tab or a first uncoated portion tab. The first electrode tab 1113 may serve as a passage for flow of current between the first electrode plate 111 and the first lead tab 121. In one or more embodiments, the first electrode tab 1113 may be formed in advance through notching or cutting so as to protrude in one direction when manufacturing the first electrode plate 111, or may be formed so as to protrude farther in one direction than the separator 113 without a separate cutting process. The first electrode tab 1113 may include a plurality of fold prevention portions 1114 formed in the longitudinal direction of the first electrode tab 1113. In one or more embodiments, the fold prevention portion 1114 may include a V-shaped or U-shaped uneven pattern. The structure of the fold prevention portion 1114 and a method of manufacturing the same will be described in detail later.

The second electrode plate 112 may be formed by coating a second electrode active material (e.g., a positive electrode active material) 1122, such as a transition metal oxide, on a second electrode current collector 1121, which is formed as a metal foil made of aluminum or an aluminum alloy, and may include a plurality of second electrode tabs 1123, which are areas not coated with the second electrode active material 1122. In one or more embodiments, the second electrode current collector 1121 may be referred to as a second electrode substrate, and the second electrode tab 1123 may be referred to as a second substrate tab or a second uncoated portion tab. The second electrode tab 1123 may serve as a passage for flow of current between the second electrode plate 112 and the second lead tab 122. In one or more embodiments, the second electrode tab 1123 may be formed in advance through notching or cutting so as to protrude in one direction when manufacturing the second electrode plate 112, or may be formed so as to protrude farther in one direction than the separator 113 without a separate cutting process. The second electrode tab 1123 may include a plurality of fold prevention portions 1124 formed in the longitudinal direction of the second electrode tab 1123. In one or more embodiments, the fold prevention portion 1124 may include a V-shaped or U-shaped uneven pattern. The structure of the fold prevention portion 1124 and a method of manufacturing the same will be described in detail later.

In one or more embodiments, the first electrode tab 1113 may be located on the left side of the electrode assembly 110, and the second electrode tab 1123 may be located on the right side of the electrode assembly 110. For example, the left side and the right side may be defined on the basis of the secondary battery 100 shown in FIG. 1A for convenience of description. The positions of the first and second electrode tabs 1113 and 1123 may be changed if the secondary battery 100 is rotated left and right or up and down.

The first electrode tab 1113 of the first electrode plate 111 and the second electrode tab 1123 of the second electrode plate 112 may be located on one end portion of the electrode assembly 110 so as to be spaced apart from each other. In one or more embodiments, the electrode assembly 110 may be accommodated in the case 130 together with an electrolyte. The plurality of first electrode tabs 1113 of the first electrode plate 111 and the plurality of second electrode tabs 1123 of the second electrode plate 112 may be welded and connected to the first lead tab 121 and the second lead tab 122, respectively.

Each of the first lead tab 121 and the second lead tab 122 may extend from the inside of the case 130 to the outside of the case 130. Similar to the first electrode tab 1113 and the second electrode tab 1123, the first lead tab 121 and the second lead tab 122 may also be spaced apart from each other. In one or more embodiments, the first lead tab 121 may include a metal foil made of copper, a copper alloy, nickel, and/or a nickel alloy. In one or more embodiments, the second lead tab 122 may include a metal foil made of aluminum or an aluminum alloy. In one or more embodiments, a first sealing tape 1211 may be disposed on a portion of the first lead tab 121 that overlaps the case 130, and a second sealing tape 1221 may be disposed on a portion of the second lead tab 122 that overlaps the case 130.

The case 130 may accommodate both the electrode assembly 110 and the electrolyte. The case 130 may include or be referred to as a housing, an exterior body, a laminate exterior body, and/or a pouch. The case 130 may include a first case 130a, which is substantially flat, and a second case 130c, which is bent from the first case 130a and has a recess 130b formed therein. The second case 130c may include three sealing portions 130d provided around the recess 130b.

The case 130 may be formed in a multilayered structure including a first insulating layer 131, a second insulating layer 132, and a metal layer 133 interposed between the first and second insulating layers 131 and 132. In some embodiments, the case 130 may further include various other adhesive layers or functional layers. However, description thereof will be omitted so as not to obscure the gist of the disclosure. The first insulating layer 131 may function as an inner surface of the case 130, and may be made of an insulative and thermally adhesive material. The first insulating layer 131 may be disposed on one surface of the metal layer 133 and may form the inner surface of the case 130 that faces the electrode assembly 110. In one or more embodiments, the first insulating layer 131 may include polypropylene (PP) or casted polypropylene (CPP), which does not react with the electrolyte according to some embodiments. In some embodiments, the electrode assembly 110 is placed in the recess 130b in the second case 130c and is covered by the first case 130a, and the first insulating layer 131 of the first case 130a and the first insulating layer 131 of the second case 130c may come into contact with each other. In some embodiments, thermal fusion is performed on the sealing portions 130d wherein the first insulating layer 131 of the first case 130a and the first insulating layer 131 of the second case 130c may be bonded to each other such that the case 130 may be sealed.

The metal layer 133 may be interposed between the first insulating layer 131 and the second insulating layer 132, and in some embodiments, may serve to block introduction of moisture and oxygen from the outside. In some embodiments, an electrolyte is accommodated in the case 130, and the metal layer 133 may also serve, in such embodiments, to prevent leakage of the electrolyte to the outside. The metal layer 133 may also serve to maintain the mechanical strength of the case 130. In one or more embodiments, the metal layer 133 may include aluminum, an aluminum alloy, iron, and/or an iron alloy.

The second insulating layer 132 may function as an outer surface of the case 130, and may serve to alleviate mechanical and chemical impact from external electronic devices. The second insulating layer 132 may be disposed on the other surface of the metal layer 133 and may form the outer surface of the case 130. The second insulating layer 132 may include nylon, polyethylene terephthalate (PET), polybutylene terephthalate (PBT), and/or polybutylene naphthalate (PBN).

Although the pouch-type secondary battery 100 has been described, the electrode assembly 110 described above may also be applied in a similar or identical configuration or manner to a prismatic secondary battery or a cylindrical secondary battery.

Meanwhile, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy copolymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

Thereafter, the first electrode plate 111 is described as an electrode plate, the first substrate portion 1111 is described as a substrate portion, the first active material coated portion 1112 is described as an active material coated portion, and the first substrate tab 1113 is described as a substrate tab.

FIG. 2A is a schematic diagram showing an exemplary apparatus 200 for manufacturing the secondary battery 100 according to some embodiments of the present disclosure. As shown in FIG. 2A, the exemplary apparatus 200 for manufacturing the secondary battery 100 according to the present disclosure may include an unwinding unit 210, a fold prevention portion forming unit 220, a notching unit 230, and a winding unit 240. In one or more embodiments, dancer rollers 251 for controlling tension of the electrode plate 111 may be further provided between the unwinding unit 210 and the fold prevention portion forming unit 220. In one or more embodiments, dancer rollers 252 for controlling tension of the electrode plate 111 may be further provided between the notching unit 230 and the winding unit 240. In one or more embodiments, various auxiliary rollers may be further provided on the travel path of the electrode plate 111 in order to prevent meandering of the electrode plate 111 and to control tension of the electrode plate 111. However, description thereof will be omitted so as not to obscure the gist of the disclosure.

The unwinding unit 210 may unwind the electrode plate 111 wound on a first roller 211 at a predetermined speed. To this end, the first roller 211 may be coupled to an electric motor to rotate the first roller 211 at a predetermined speed.

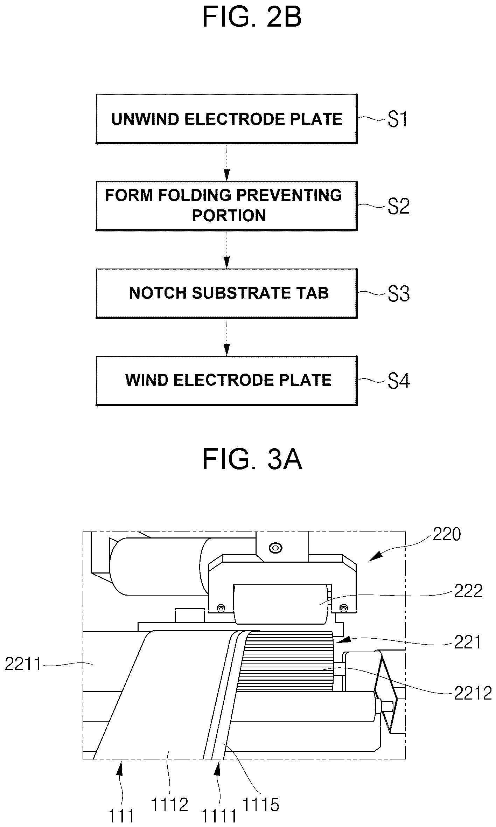

In one or more embodiments, as described above, the electrode plate 111 may include a substrate portion 1111, an active material coated portion 1112 in which an active material is coated on the substrate portion 1111, and an uncoated portion 1115, as shown in FIG. 3A, in which an active material is not coated on the substrate portion 1111.

The fold prevention portion forming unit 220 may form the fold prevention portion 1114 on the uncoated portion 1115 of the electrode plate 111 unwound from the unwinding unit 210. In one or more embodiments, the fold prevention portion forming unit 220 may include a driving roller 221 and a driven roller 222. In one or more embodiments, the driving roller 221 may be rotated in a predetermined direction by an electric motor, and the driven roller 222 may be rotated in a predetermined direction by contact with the electrode plate 111 that travels while in contact with the driving roller 221. In one or more embodiments, the driving roller 221 and/or the driven roller 222 may have an uneven pattern, an engraved pattern, and/or an embossed pattern in order to form and/or pattern the fold prevention portion 1114 on the uncoated portion 1115 of the electrode plate 111.

The notching unit 230 may notch the uncoated portion 1115 of the electrode plate 111 received from the fold prevention portion forming unit 220 to form the substrate tab (or uncoated portion tab) 1113. In one or more embodiments, the notching unit 230 may include a laser tool, a blade tool, and/or a punching tool.

The winding unit 240 may wind the electrode plate 111 received from the notching unit 230 on a second roller 241. In one or more embodiments, the second roller 241 may be coupled to an electric motor to rotate at a predetermined speed to wind the electrode plate 111 including the substrate tab 1113 on which the fold prevention portion 1114 is formed.

According to some of embodiments the present disclosure, because the fold prevention portion 1114 is formed on the uncoated portion 1115 of the electrode plate 111 by the fold prevention portion forming unit 220, it may be possible to prevent wrinkles or folding of the substrate tab 1113 and rupture of the electrode plate 111 during subsequent travel of the electrode plate 111, notching of the electrode plate 111, and/or winding of the electrode plate 111.

FIG. 2B is a flowchart showing an exemplary method of manufacturing the secondary battery 100 according to some embodiments of the present disclosure. As shown in FIG. 2B, the exemplary method of manufacturing the secondary battery 100, in some embodiments, may include a step of unwinding an electrode plate (S1), a step of forming a fold prevention portion (S2), a step of notching a substrate tab (S3), and a step of winding the electrode plate (S4). In one or more embodiments, the step of unwinding the electrode plate (S1) may be performed by the unwinding unit 210, the step of forming the fold prevention portion (S2) may be performed by the fold prevention portion forming unit 220, the step of notching the substrate tab (S3) may be performed by the notching unit 230, and the step of winding the electrode plate (S4) may be performed by the winding unit 240. Hereinafter, the above-described apparatus and method for manufacturing the secondary battery will be described in more detail.

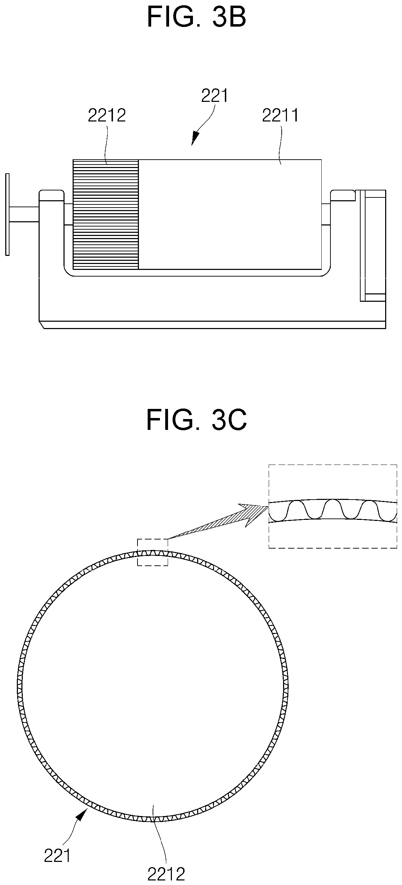

FIG. 3A is a perspective view showing the exemplary fold prevention portion forming unit 220 of the exemplary apparatus 200 for manufacturing the secondary battery 100 according to some embodiments of the present disclosure. FIG. 3B is a front view showing the driving roller 221 of the exemplary fold prevention portion forming unit 220 according to some embodiments of the present disclosure. FIG. 3C illustrates a side view and a partial enlarged view showing the driving roller 221 of the exemplary fold prevention portion forming unit 220 according to some embodiments the present disclosure.

As shown in FIGs. 3A to 3C, the fold prevention portion forming unit 220 may include the driving roller 221 and the driven roller 222. In one or more embodiments, the driving roller 221 may include a circular area 2211 and an uneven area 2212, which are disposed on the same axis while being spaced apart from each other. In one or more embodiments, the driving roller 221 may include or be referred to as a polygonal roller. The driven roller 222 may rotate in close proximity to the uneven area 2212 of the driving roller 221. In one or more embodiments, the driven roller 222 may include or be referred to as a urethane roller or a nip roller.

In one or more embodiments, the electrode plate 111 may travel between the driving roller 221 and the driven roller 222. For example, the electrode plate 111 may travel between the driving roller 221 and the driven roller 222 in a state of being interposed therebetween (e.g., in contact therewith). In one or more embodiments, the active material coated portion 1112 of the electrode plate 111 may travel while in contact with the circular area 2211 of the driving roller 221. In one or more embodiments, the uncoated portion 1115 of the electrode plate 111 may travel while in contact with the uneven area 2212 of the driving roller 221 and the driven roller 222, such that the fold prevention portion 1114 may be imprinted on the uncoated portion 1115. In one or more embodiments, the width of the active material coated portion 1112 may be similar or identical to the width of the circular area 2211 of the driving roller 221. In one or more embodiments, the width of the uncoated portion 1115 may be similar or identical to the width of the uneven area 2212 of the driving roller 221 and/or the width of the driven roller 222.

In one or more embodiments, the elastic modulus of the uneven area 2212 may be greater than that of the driven roller 222. For example, the uneven area 2212 may be more difficult to deform than the driven roller 222. The driven roller 222 may be easier to deform than the uneven area 2212. In one or more embodiments, the hardness (e.g., Shore hardness) of the driven roller 222 may be 30 A to 50 A. The hardness of the uneven area 2212 may be greater than that of the driven roller 222. In one or more embodiments, the uncoated portion 1115 may include a first surface and a second surface opposite the first surface. The uneven area 2212 may contact the first surface of the uncoated portion 1115, and the driven roller 222 may contact the second surface of the uncoated portion 1115. In one or more embodiments, the rotational axis of the uneven area 2212 and the rotational axis of the driven roller 222 may overlap each other in a vertical direction. The uneven area 2212 may press the surface of the driven roller 222 to a predetermined depth while deforming the uncoated portion 1115 so that the fold prevention portion 1114 is formed on the uncoated portion 1115. In one or more embodiments, the surface of the driven roller 222 may be deformed when contacted/pressed by the uneven area 2212, and may be restored to the original shape thereof when released from the uneven area 2212. Thus, in some embodiments, the substrate portion 1111, traveling in contact with the uneven area 2212 of the driving roller 221 and the driven roller 222, may comprise the fold prevention portion 1114 having a predetermined shape without rupture of the electrode plate 111. The shape of the uneven area 2212 may be transferred to the uncoated portion 1115 as is, thereby forming the fold prevention portion 1114.

In one or more embodiments, the uneven area 2212 of the driving roller 221 may have a depth of 0.1 mm to 2 mm. Thus, in some embodiments, the fold prevention portion 1114 may also have a depth of 0.1 mm to 2 mm. In one or more embodiments, the uneven area 2212 of the driving roller 221 may have a pitch of 1 mm to 4 mm. Thus, in some embodiments, the fold prevention portion 1114 may also have a pitch of 1 mm to 4 mm.

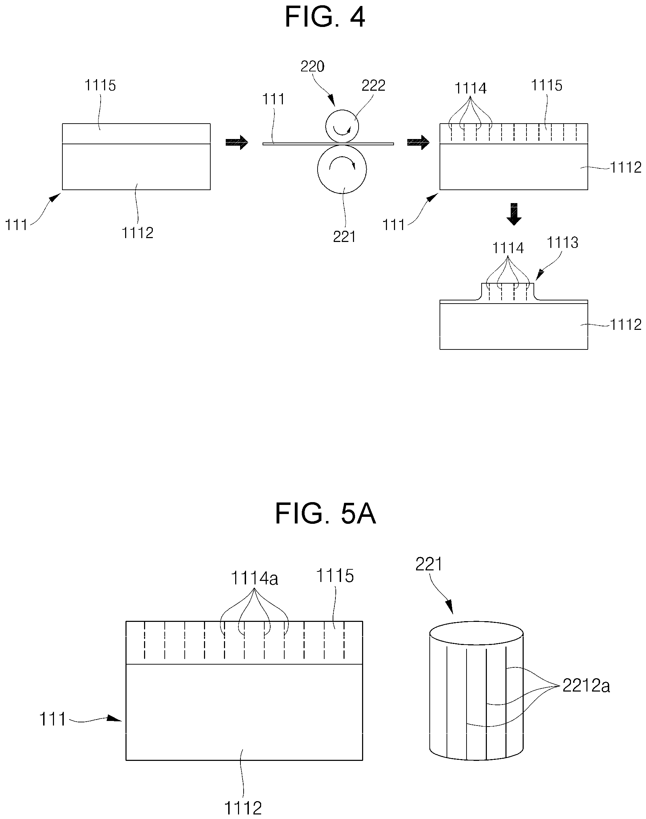

FIG. 4 is a schematic diagram showing the operation of the exemplary apparatus 200 for manufacturing the secondary battery 100 according to some embodiments of the present disclosure. As shown in FIG. 4, the fold prevention portion 1114 may be formed on the uncoated portion 1115 of the electrode plate 111 by the fold prevention portion forming unit 220, and then the substrate tab 1113 may be formed on the uncoated portion 1115 by the notching unit 230. In one or more embodiments, a part of the uncoated portion 1115 may be removed by the notching unit 230 and/or through a notching process, thereby forming the substrate tab 1113 that may be connected to a lead tab.

FIGs. 5A to 5D are schematic diagrams showing various forms of the fold prevention portion 1114 of the electrode plate 111 and the driving roller 221 of the exemplary apparatus 200 for manufacturing the secondary battery 100 according to the present disclosure.

As shown in FIG. 5A, a fold prevention portion 1114a may be formed on the uncoated portion 1115 of the electrode plate 111 by the fold prevention portion forming unit 220. The fold prevention portion 1114a may be formed in a pattern including a plurality of straight lines extending in a direction substantially perpendicular to the longitudinal direction of the uncoated portion 1115. In some embodiments, the uneven area 2212a of the driving roller 221 of the fold prevention portion forming unit 220 may include a plurality of uneven portions extending in a direction substantially parallel to the rotational axis of the driving roller 221.

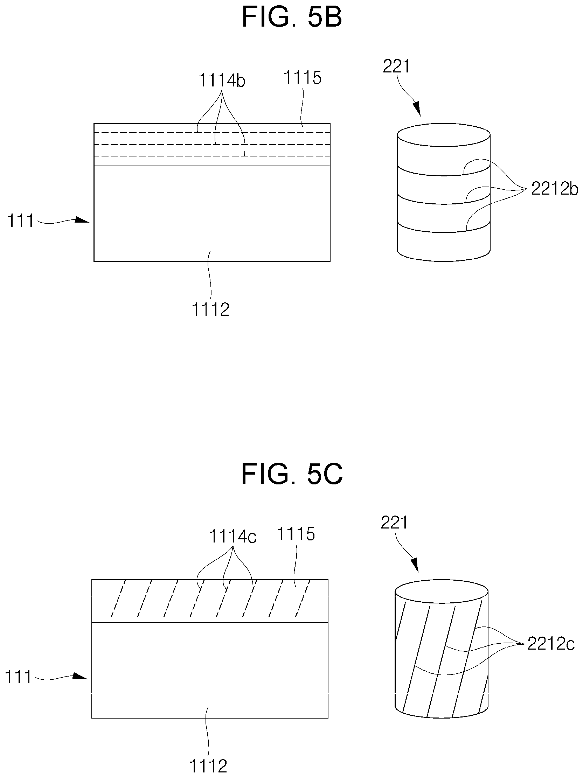

As shown in FIG. 5B, a fold prevention portion 1114b may be formed on the uncoated portion 1115 of the electrode plate 111 by the fold prevention portion forming unit 220. The fold prevention portion 1114b may be formed in a pattern including a plurality of straight lines extending in a direction substantially parallel to the longitudinal direction of the uncoated portion 1115. In some embodiments, the uneven area 2212b of the driving roller 221 of the fold prevention portion forming unit 220 may include a plurality of uneven portions extending in a direction substantially perpendicular to the rotational axis of the driving roller 221.

As shown in FIG. 5C, a fold prevention portion 1114c may be formed on the uncoated portion 1115 of the electrode plate 111 by the fold prevention portion forming unit 220. The fold prevention portion 1114c may be formed in a pattern including a plurality of oblique lines extending at a predetermined angle with respect to the longitudinal direction of the uncoated portion 1115. In some embodiments, the uneven area 2212c of the driving roller 221 of the fold prevention portion forming unit 220 may include a plurality of uneven portions extending at a predetermined angle with respect to the rotational axis of the driving roller 221.

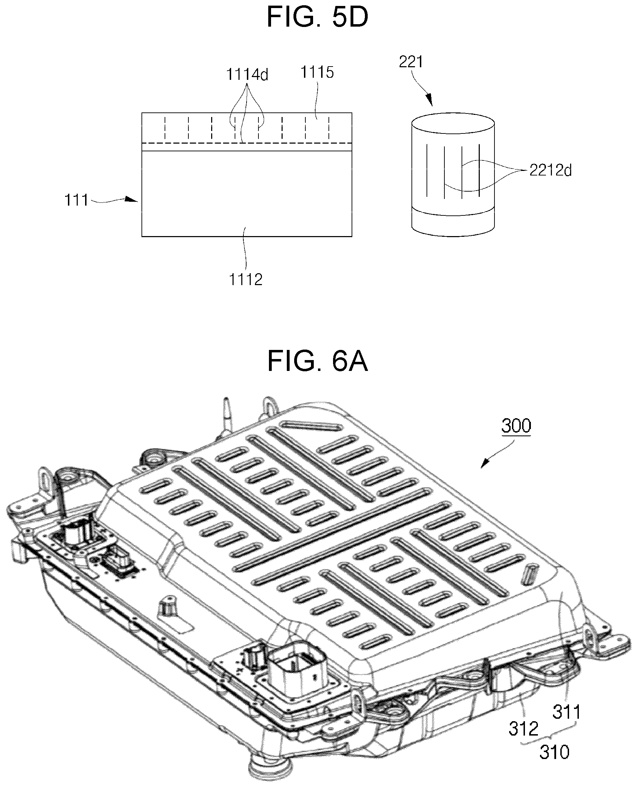

As shown in FIG. 5D, a fold prevention portion 1114d may be formed on the uncoated portion 1115 of the electrode plate 111 by the fold prevention portion forming unit 220. The fold prevention portion 1114d may be formed in a pattern including a plurality of straight lines extending in a direction substantially perpendicular to the longitudinal direction of the uncoated portion 1115 and at least one straight line extending in a direction substantially parallel to the longitudinal direction of the uncoated portion 1115. In some embodiments, the uneven area 2212d of the driving roller 221 of the fold prevention portion forming unit 220 may include a plurality of uneven portions extending in a direction substantially parallel to the rotational axis of the driving roller 221 and at least one uneven portion extending in a direction substantially perpendicular to the rotational axis of the driving roller 221.

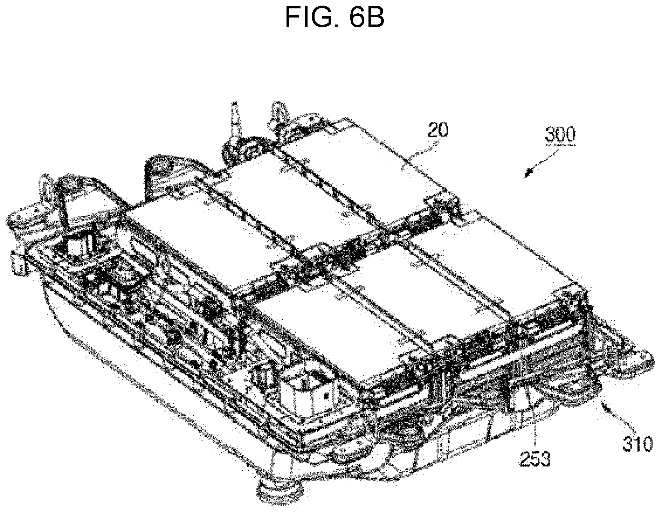

FIGS. 6A and 6B show a battery pack 300 according to one or more embodiments of the present disclosure. The battery pack 300 may include a plurality of battery modules 20 and a housing 310 for accommodating the plurality of battery modules 20. For example, the housing 310 may include first and second housings 311 and 312 coupled in opposite directions through the plurality of battery modules 20. The plurality of battery modules 20 may be electrically connected to each other by using a bus bar 253, and the plurality of battery modules 20 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of battery cells are omitted. In one or more embodiments, battery pack 300 may be mounted in a vehicle. The vehicle may be, for example, an electric vehicle, a hybrid vehicle, or a plug-in hybrid vehicle. A vehicle may include a four-wheeled vehicle or a two-wheeled vehicle.

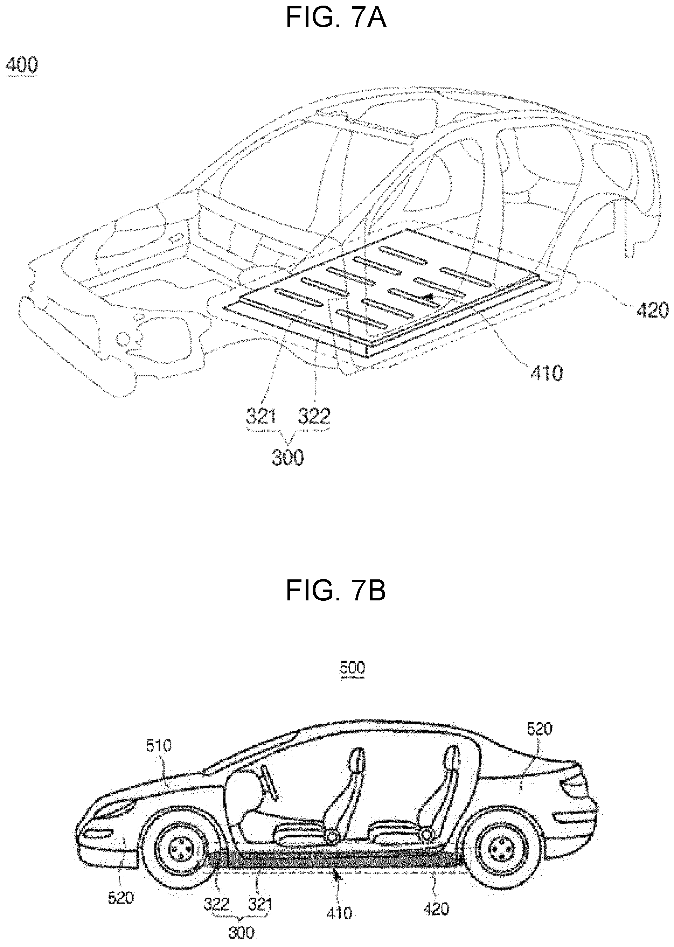

FIGS. 7A and 7B show vehicle body parts 400 and vehicle 500 according to one or more embodiments of the present disclosure including the battery pack 300 shown in FIGS. 6A and 6B.

In FIG. 7A, a battery pack 300 may include a battery pack cover 321, which is a part of a vehicle underbody 410 and may correspond to the first housing, and a pack frame 322, which is disposed under the vehicle underbody 410 and may corresponding to the second housing. The battery pack cover 321 and the pack frame 322 may be integrally formed with a vehicle floor 420. The vehicle underbody 410 separates the inside and outside of a vehicle, and the pack frame 322 may be disposed outside the vehicle.

In FIG. 7B, a vehicle 500 may be formed by combining additional parts, such as a hood 510 in front of the vehicle 500 and fenders 520 respectively located in the front and rear of the vehicle 500 to a vehicle body pars 400. The vehicle 500 may include the battery pack 300 including the battery pack cover 321 and the pack frame 322, and the battery pack 300 may be coupled to the vehicle body part 400.

As is apparent from the above description, the present disclosure may provide a secondary battery manufacturing apparatus and method capable of preventing wrinkles and folding of a substrate tab during a process of manufacturing an electrode plate of a secondary battery and preventing rupture of the electrode plate during travel or winding of the electrode plate and a secondary battery manufactured thereby.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. An apparatus (200) for manufacturing a secondary battery (100), the apparatus comprising:
an unwinding unit (210) configured to unwind an electrode plate (111) wound on a first roller (211), the electrode plate (111) comprising an active material coated portion (1112) in which an active material is coated on a substrate portion (1111) and an uncoated portion (1115) in which the active material is not coated on the substrate portion (1111);
a fold prevention portion forming unit (220) configured to form a fold prevention portion (1114) on the uncoated portion (1115) of the electrode plate (111);
a notching unit (230) configured to notch the uncoated portion (1115) comprising the fold prevention portion (1114) formed thereon to form a substrate tab (1113); and
a winding unit (240) configured to wind the electrode plate (111) comprising the substrate tab (1113) formed thereon on a second roller (241).

2. The apparatus (200) as claimed in claim 1, wherein the fold prevention portion forming unit (220) comprises:
a driving roller (221) comprising a circular area (2211) and an uneven area (2212), the circular area (2211) and the uneven area (2212) disposed on a same axis while being spaced apart from each other; and
a driven roller (222) configured to rotate in close proximity to the uneven area (2212) of the driving roller (221),
wherein the apparatus (200) is configured such that the electrode plate (1111) travels between the driving roller (221) and the driven roller (222) such that the active material coated portion (1112) of the electrode plate (111) travels in contact with the circular area (2211) of the driving roller (221), and such that the uncoated portion (1115) of the electrode plate (1111) travels in contact with the uneven area (2212) of the driving roller (221) and in contact with the driven roller (222), and such that the fold prevention portion (1114) is imprinted on the uncoated portion (1115).

3. The apparatus (200) as claimed in claim 2, wherein an elastic modulus of the uneven area (2212) is greater than an elastic modulus of the driven roller (222).

4. The apparatus (200) according to claims 2 or 3, wherein the uncoated portion (1115) comprises a first surface and a second surface opposite the first surface,
wherein the apparatus (200) is configured such that the uneven area (2212) contacts the first surface of the uncoated portion (1115), and the driven roller (222) contacts the second surface of the uncoated portion (1115), and
wherein a rotational axis of the uneven area (2212) and a rotational axis of the driven roller (222) overlap each other in a vertical direction.

5. The apparatus (200) according to any of the previous claims, wherein the apparatus (200) is configured such that the fold prevention portion forming unit (220) forms a pattern in the fold prevention portion (1114), the pattern
a) comprising a plurality of straight lines extending in a direction perpendicular to a longitudinal direction of the uncoated portion (1115),
b) comprising a plurality of straight lines extending in a direction parallel to a longitudinal direction of the uncoated portion (1115),
c) comprising a plurality of oblique lines extending at an angle with respect to a longitudinal direction of the uncoated portion, or
d) comprising a plurality of straight lines extending in a direction perpendicular to a longitudinal direction of the uncoated portion and at least one straight line extending in a direction parallel to the longitudinal direction of the uncoated portion.

6. The apparatus (200) according to any of claims 2 to 5, wherein the uneven area (2212) of the driving roller (221) has a depth of 0.1 mm to 2 mm.

7. A method of manufacturing a secondary battery (100), the method comprising:
unwinding an electrode plate (1111) wound on a first roller (211), the electrode plate (111) comprising an active material coated portion (1112) in which an active material is coated on a substrate portion (1111) and an uncoated portion (1115) in which an active material is not coated on the substrate portion (1111);
forming a fold prevention portion (1114) on the uncoated portion (1115) of the electrode plate (1111);
notching the uncoated portion (1115) comprising the fold prevention portion (1114) formed thereon to form a substrate tab (1113); and
winding the electrode plate (111) comprising the substrate tab (1113) formed thereon on a second roller (241).

8. The method as claimed in claim 7, wherein the step of forming the fold prevention portion (1114) comprises providing a driving roller (221) comprising a circular area (2211) and an uneven area (2212), the circular area (2211) and the uneven area (2212) disposed on a same axis while being spaced apart from each other, and a driven roller (222) configured to rotate in close proximity to the uneven area (2212) of the driving roller (221), and
wherein the step further comprise travelling of the electrode plate (1111) between the driving roller (221) and the driven roller (222) such that the active material coated portion (1112) of the electrode plate (111) travels in contact with the circular area (2211) of the driving roller (221) and the uncoated portion (1115) of the electrode plate (111) travels in contact with the uneven area (2212) of the driving roller (221) and in contact with the driven roller (222), such that the fold prevention portion (1114) is imprinted on the uncoated portion (1115).

9. The method as claimed in claim 8, wherein an elastic modulus of the uneven area (2212) is greater than an elastic modulus of the driven roller (222).

10. The method according to claims 8 or 9 , wherein the uncoated portion (1115) comprises a first surface and a second surface opposite the first surface,
wherein the uneven area (2212) contacts the first surface of the uncoated portion (1115), and the driven roller (222) contacts the second surface of the uncoated portion (1115), and
wherein a rotational axis of the uneven area (2212) and a rotational axis of the driven roller (222) overlap each other in a vertical direction.

11. The method according to any of claims 7 to 10, wherein, the step of forming the fold prevention portion (1114), comprises forming the fold prevention portion (1114) in a pattern, the pattern comprising
a) a plurality of straight lines extending in a direction perpendicular to a longitudinal direction of the uncoated portion (1115),
b) a plurality of straight lines extending in a direction parallel to a longitudinal direction of the uncoated portion,
c) comprising a plurality of oblique lines extending at an angle with respect to a longitudinal direction of the uncoated portion, or
d) a plurality of straight lines extending in a direction perpendicular to a longitudinal direction of the uncoated portion and at least one straight line extending in a direction parallel to the longitudinal direction of the uncoated portion.

12. The method according to any of claims 8 to 11, wherein the uneven area (2212) of the driving roller (221) is formed to have a depth of 0.1 mm to 2 mm.

13. The method according to any of claims 7 to 12, wherein the method is performed with apparatus (200) according to any of claims 1 to 8.

14. A secondary battery (100) manufactured by the method according to any of claims 7 to 13 and/or manufactured by using an apparatus (200) according to any of claims 1 to 8.
